# EUROPEAN PATENT SPECIFICATION

(11) **EP 3 225 059 B1**
(45) Date of publication and mention of the grant of the patent: **20.11.2019**
(21) Application number: 15782117.4
(22) Date of filing: 24.09.2015
(51) Int. Cl.: H04W 56/00

(54) **CLOCK SYNCHRONIZATION USING WIFI BEACONS**
TAKTSYNCHRONISIERUNG MIT WIFI-BAKEN
SYNCHRONISATION D'HORLOGE AU MOYEN DE BALISES WI-FI

(30) Priority: 25.11.2014 US 201414553394
(43) Date of publication of application: 04.10.2017
(73) Proprietor: Google LLC, Mountain View, CA 94043 (US)
(72) Inventor: SHEMER, Mikhal, Mountain View, California 94043 (US); CHAN, Chi Bun, Mountain View, California 94043 (US); WESTIN, Patrik Goran, Mountain View, California 94043 (US)
(74) Representative: Betten & Resch
(86) International application number: PCT/US2015/051878
(87) International publication number: WO 2016/085563

(56) References cited:
- US-A1- 2007 153 762
- US-A1- 2009 006 882
- US-A1- 2010 086 093
- US-A1- 2012 029 671
- YONGHWAN BANG ET AL: "Wireless network synchronization for multichannel multimedia services", ADVANCED COMMUNICATION TECHNOLOGY, 2009. ICACT 2009. 11TH INTERNATIONAL CONFERENCE ON, GIRI, PISCATAWAY, NJ, USA, 15 February 2009 (2009-02-15), pages 1073-1077, XP031445859, ISBN: 978-89-5519-138-7

## Description

### BACKGROUND

When data (e.g., audio/video content) is shared between multiple modules on a Wi-Fi network, it is often desirous to ensure that such data remain accurately synchronized between the different modules. Examples of prior art are US2009/0006882 and US2012/0029671.

### SUMMARY

This Summary introduces a selection of concepts in a simplified form in order to provide a basic understanding of some aspects of the present disclosure. This Summary is not an extensive overview of the disclosure, and is not intended to identify key or critical elements of the disclosure or to delineate the scope of the disclosure. This Summary merely presents some of the concepts of the disclosure as a prelude to the Detailed Description provided below.

The present disclosure generally relates to methods and systems for signal processing. More specifically, aspects of the present disclosure relate to synchronizing clocks of modules on a wireless network by using Wi-Fi beacons as a reference.

One embodiment of the present disclosure relates to a computer-implemented method comprising: receiving, at a first data module, data from a data source; attaching a timestamp to each portion of the received data, wherein the timestamp indicates a time to process the portion of data; sending, from the first data module to a second data module, each portion of the data with the timestamps attached, wherein the first data module is different from the second data module, and the first and second data modules are on a same network; receiving, at the second data module from the first data module, a signal indicating a beacon associated with the network was received at the first data module and a time that the beacon was received at the first data module, wherein the time that the beacon was received at the first data module is based on a clock associated with the first data module; determining, by the second data module, a difference between the clock associated with the first data module and a clock associated with the second data module based on the signal received from the first data module; and adjusting the clock associated with the second data module to be in synchronization with the clock associated with the first data module based on a plurality of determined differences between the clocks filtered over a period of time.

In another embodiment, the method further comprises: receiving at the first data module and at the second data module, beacons associated with the network; and identifying, for each of the received beacons, a time that the beacon was received at the first data module and a time that the beacon was received at the second data module, wherein the time that the beacon was received at the first data module is based on the clock associated with the first data module, and the time that the beacon was received at the second data module is based on a clock associated with the second data module.

In another embodiment, the beacon associated with the network received at the first data module is also received at the second data module, and the method further comprises: recording, by the first data module, a time that the beacon was received at the first data module; and recording, by the second data module, a time that the beacon was received at the second data module.

In another embodiment, the method further comprises storing, for each of the first and second data modules, data representing the received beacons and corresponding times that each of the beacons was received at the first data module and at the second data module.

In another embodiment, the method further comprises determining the difference between the clock associated with the first data module and the clock associated with the second data module based on the stored data representing the received beacons and corresponding times that each of the beacons was received at the first data module and at the second data module.

In another embodiment, the determining by the second data module, in the method includes: comparing the time that the beacon was received at the first data module with a time that the beacon was received at the second data module, wherein the time that the beacon was received at the second data module is based on a clock associated with the second data module; and determining the difference between the clock associated with the first data module and the clock associated with the second data module based on the comparison.

In yet another embodiment, the method further comprises processing, at the first and second data modules, each portion of the received data according to the timestamp attached to the portion of data.

Another embodiment of the present disclosure relates to a system comprising an access point and a plurality of data modules connected to the access point, where each of the data modules is configured to: receive data from a data source; attach a timestamp to each portion of the received data, wherein the timestamp indicates a time to process the portion of data; send, to each of the other data modules connected to the access point, each portion of the received data with the timestamps attached; receive, from each of the other data modules, a signal indicating a beacon associated with the access point was received at the other data module and a time that the beacon was received at the other data module, wherein the time that the beacon was received at the other data module is based on a clock associated with the other data module; determine a difference between a clock associated with the data module and the clocks associated with each of the other data modules based on the received signals from the other data modules; and send, to each of the other data modules, a synchronization signal based on the determined differences between the clocks filtered over a period of time.

In another embodiment, each of the plurality of data modules of the system is further configured to: receive beacons associated with the access point; and identify, for each of the received beacons, a time that the beacon was received at the data module and a time that the beacon was received at each of the other data modules, wherein the time that the beacon was received at the data module is based on the clock associated with the data module, and the time that the beacon was received at each of the other data modules is based on a clock associated with each of the other data modules.

In another embodiment, each of the plurality of data modules of the system is further configured to store data representing the received beacons and corresponding times that each of the beacons was received at the data module and at each of the other data modules.

In another embodiment, each of the plurality of data modules of the system is further configured to determine the difference between the clock associated with the receiving data module and the clocks associated with each of the other data modules based on the stored data representing the received beacons and corresponding times that each of the beacons was received at the data module and at each of the other data modules.

In yet another embodiment, each of the plurality of data modules of the system is further configured to: compare the time that the beacon was received at the data module with each of the times that the beacon was received at each of the other data modules, wherein the times that the beacon was received at each of the other data modules is based on a clock associated with the particular data module; and determine the difference between the clock associated with the receiving data module and the clock associated with each of the other data modules based on the comparison.

In still another embodiment, each of the plurality of data modules of the system is further configured to process each portion of the received data according to the timestamp attached to the portion of data.

In one or more other embodiments, the methods and systems described herein may optionally include one or more of the following additional features: the data received from the data source is audio data and a timestamp is attached to each frame of the received audio data; one or both of the first data module and the second data module is an audio device; the audio device is a loudspeaker device; each of the plurality of data modules is an audio device; and/or at least one of the plurality of data modules connected to the access point is an audio device.

It should be noted that embodiments of some or all of the processor and memory systems disclosed herein may also be configured to perform some or all of the method embodiments disclosed above. In addition, embodiments of some or all of the methods disclosed above may also be represented as instructions embodied on transitory or non-transitory processor-readable storage media such as optical or magnetic memory or represented as a propagated signal provided to a processor or data processing device via a communication network such as an Internet or telephone connection.

Further scope of applicability of the methods and systems of the present disclosure will become apparent from the Detailed Description given below. However, it should be understood that the Detailed Description and specific examples, while indicating embodiments of the methods and systems, are given by way of illustration only, since various changes and modifications within the spirit and scope of the concepts disclosed herein will become apparent to those skilled in the art from this Detailed Description.

### BRIEF DESCRIPTION OF DRAWINGS

These and other objects, features, and characteristics of the present disclosure will become more apparent to those skilled in the art from a study of the following Detailed Description in conjunction with the appended claims and drawings, all of which form a part of this specification. In the drawings:
Figure 1 is a block diagram illustrating an example content management system and surrounding network environment for synchronizing data across multiple modules on a wireless network according to one or more embodiments described herein.
Figure 2 is a block diagram illustrating an example access point sending Wi-Fi beacon signals to connected modules, where each of the modules includes a high resolution clock according to one or more embodiments described herein.
Figure 3 is a data flow diagram illustrating example data flows between components of a content management system according to one or more embodiments described herein.
Figure 4 is a data flow diagram illustrating example data flows between a player module, a follower module, and multiple renderer modules in a content management systems according to one or more embodiments described herein.
Figure 5 is a set of tables illustrating example pairings of beacon signals and local clock times for first and second modules on the same wireless access point according to one or more embodiments described herein.
Figure 6 is a flowchart illustrating an example method for synchronizing clocks of modules on a wireless network using beacon signals as a reference according to one or more embodiments described herein.
Figure 7 is a block diagram illustrating an example computing device arranged for synchronizing clocks of modules on a wireless network using beacon signals as a reference according to one or more embodiments described herein.

The headings provided herein are for convenience only and do not necessarily affect the scope or meaning of what is claimed in the present disclosure.

In the drawings, the same reference numerals and any acronyms identify elements or acts with the same or similar structure or functionality for ease of understanding and convenience. The drawings will be described in detail in the course of the following Detailed Description.

### DETAILED DESCRIPTION

Various examples and embodiments of the methods and systems of the present disclosure will now be described. The following description provides specific details for a thorough understanding and enabling description of these examples. One skilled in the relevant art will understand, however, that one or more embodiments described herein may be practiced without many of these details. Likewise, one skilled in the relevant art will also understand that one or more embodiments of the present disclosure can include other features not described in detail herein. Additionally, some well-known structures or functions may not be shown or described in detail below, so as to avoid unnecessarily obscuring the relevant description.

Embodiments of the present disclosure relate to methods and systems for synchronizing data between modules operating in parallel on a wireless access point. For example, in accordance with at least one embodiment, the methods and systems of the present disclosure may be used to synchronize audio data playout between audio devices (e.g., audio output devices, such as, for example, loudspeakers, which may be referred to herein as speaker modules) operating on the same wireless access point. As will be described in greater detail below, the methods and systems are designed to achieve and maintain highly accurate synchronization (e.g., < 20 microseconds (µs)) between different modules (e.g., audio devices) by utilizing Wi-Fi beacons generated by the access point as a reference when estimating rendering (e.g., playout) time. Using such Wi-Fi beacons as a reference only, and not as the actual clock, ensures that all the modules' clocks remain synchronized, thus allowing for coherent rendering of data (e.g., playback of audio) across all modules included in the system.

In an example application of the methods and systems of the present disclosure, users are given the ability to play audio content available from an audio source (e.g., audio content stored on a user device, audio content associated with a URL and accessible through the user device, etc.) to any combination of audio devices that share a common wireless network. For example, in the context of a multi-room house, a system of speakers may be located in each room (e.g., living room, dining room, bedroom, etc.) of the house, and the speakers forming a system for a given room may be at various locations throughout the room. In accordance with one or more embodiments described herein, audio will be played out synchronously across all of the audio devices selected by the user. It should be understood, however, that the methods and systems described herein may be applicable to any system that requires time synchronization of any data type between different modules on a network, and thus the scope of the present disclosure is not in any way limited by the example application described above.

For data modules (e.g., audio devices, such as speaker modules and the like) that are on the same wireless access point, existing functionality built into the access point may be utilized to achieve synchronization between the modules, as will be further described below. It should be noted that while many of the features and embodiments of the present disclosure are described in the context of audio data and audio devices, the methods and systems of the present disclosure are in no way limited to only audio data or audio-related components. Instead, the methods and systems described herein may be utilized with numerous other types of data and/or modules that are connected to the same wireless access point, in addition to or instead of audio data and/or audio devices. It should also be understood that while some examples are presented in the context of two modules or devices connected to a wireless access point, the methods and systems described herein are similarly applicable to arrangements involving more than two connected devices (e.g., three, four, or even more, connected devices/modules).

Access points send out Wi-Fi beacons (which may also be referred to as hardware (HW) Wi-Fi beacons or simply HW beacons, as they are typically generated by the wireless router comprising the access point) to every device operating on their wireless network. For example, Wi-Fi beacons may refer to one of the management frames in IEEE 802.11 based WLANs. The Wi-Fi beacon provides the "heartbeat" of a wireless LAN, enabling connected devices to establish and maintain synchronized communications. Each of these Wi-Fi beacons can be considered a timestamp (a "Wi-Fi beacon timestamp" or "WFBT") in that the Wi-Fi beacon indicates or represents the current time according to the wireless router. In many existing systems, connected devices take the WFBT to be the *absolute* time and use this timestamp to update their local clock in order to achieve synchronization across the devices.

However, in contrast to such existing approaches, the methods and systems of the present disclosure account for the fact that each module (e.g., audio device) connected to the access point processes (e.g., receives, acknowledges, detects, etc.) these Wi-Fi beacons at different times. For example, there is some delay between the access point and each of the modules operating on the access point. Although this delay may be slight, it is of potential consequence to the methods and systems of the present disclosure, which are designed to achieve and maintain highly accurate synchronization (e.g., < 20 microseconds (µs)) of data rendering between different modules. Such tight data synchronization between modules operating on the same access point (e.g., within a room, within a house, or the like) enables undetectable discrepancies (e.g., inaudible discrepancies in the context of audio), thereby improving the overall user experience.

As will be described in greater detail below, rather than relying on the actual value of the WFBT when performing data synchronization between different modules on an access point, the methods and systems of the present disclosure utilize the WFBT merely as a reference. For example, suppose module "A" and module "B" are operating on the same access point (e.g., are part of the same content or data management system, which may be a system located within a room of a house). Wi-Fi beacons (e.g., numbers) sent from the wireless router may be received at each of the modules A and B. In accordance with one or more embodiments described herein, when module A receives the Wi-Fi beacon, module A marks (e.g., records, notes, stores, etc.) the time of reception of the beacon with respect to module A's local clock. Similarly, the moment that module B receives the Wi-Fi beacon sent out from the wireless router, module B marks the time of reception of the beacon with respect to module B's local clock.

A Wi-Fi access point typically produces a HW beacon every 100 milliseconds (ms). Depending on the particular implementation, the methods and systems of the present disclosure may use all of the received beacons, or a subset of the received beacons, as references for delivering synchronous rendering of data within a content management system (e.g., synchronous audio playback within an audio management system).

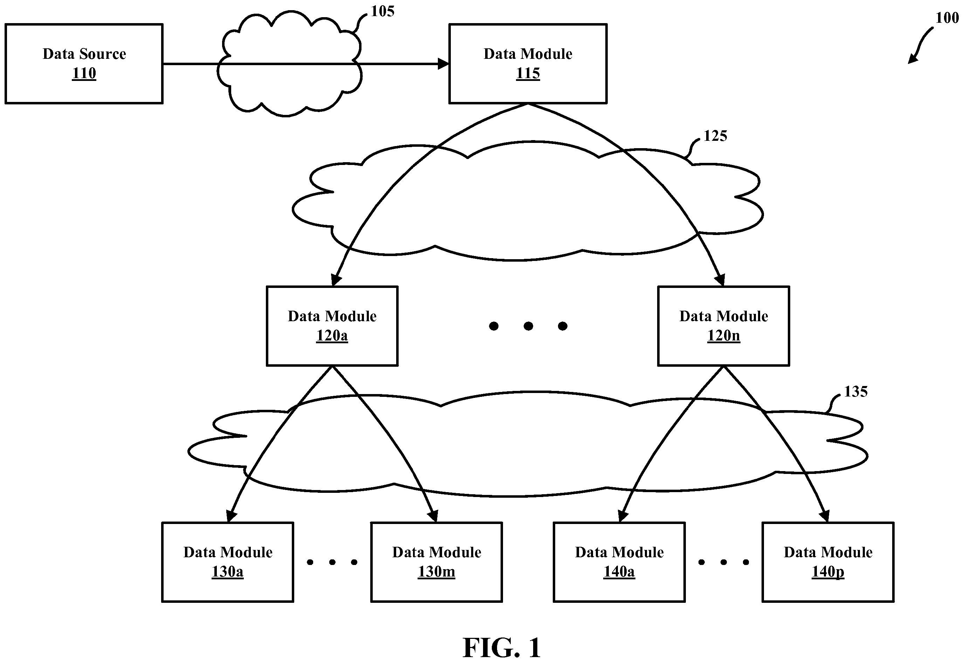

FIG. 1 is an example content management system 100 in which one or more embodiments described herein may be implemented. Data Source 110 (e.g., a content source such as an audio source (e.g., an online streaming music or video service, a particular URL, etc.)) may be connected to Data Module 115 over a Network 105 (e.g., any kind of network including, for example, Ethernet, wireless LAN, cellular network, etc.). Content (e.g., audio, video, data, mixed media, etc.) obtained from Content Source 110 may be played out by Data Module 115 and/or transported by Data Module 115 to one or more of Data Modules 120a-120n (where "n" is an arbitrary number) over Network 125 (e.g., a wireless LAN). Similarly, content obtained at Data Modules 120a-120n may be played out by Data Modules 120a-120n and/or transported over Network 135 to corresponding Data Modules 130a-130m, Data Modules 140a-140p, or some combination thereof (where "m" and "p" are both arbitrary numbers). It should also be noted that Networks 125 and 135 may be the same or different networks (e.g., different WLANs within a house).

As described above, the methods and systems of the present disclosure utilize the Wi-Fi beacon as a *reference* to determine the time according to the "player" module (which may be any of the modules connected to the network or any combination of the modules connected to the network), and this time becomes the "master" time for purposes of synchronization. A local hardware implemented HRAC (high resolution audio clock) may be used to compute the precise playout time for each of the data modules connected to the same wireless network. In accordance with at least one embodiment, it may be assumed that the audio clock's resolution is sufficiently higher than the maximum frequency supported by the connected data modules.

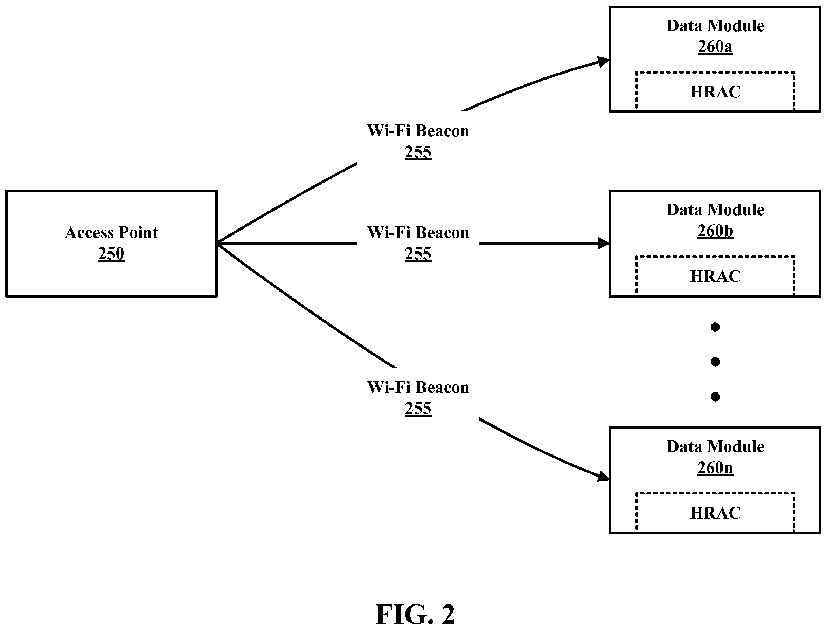

FIG. 2 illustrates an example of an Access Point 250 sending Wi-Fi beacons (255) to connected Data Modules 260a-260q (where "q" is an arbitrary number). In accordance with one or more embodiments of the present disclosure, each of Data Modules 260a-260q may include a high resolution audio clock (HRAC), the details of which will be further described below.

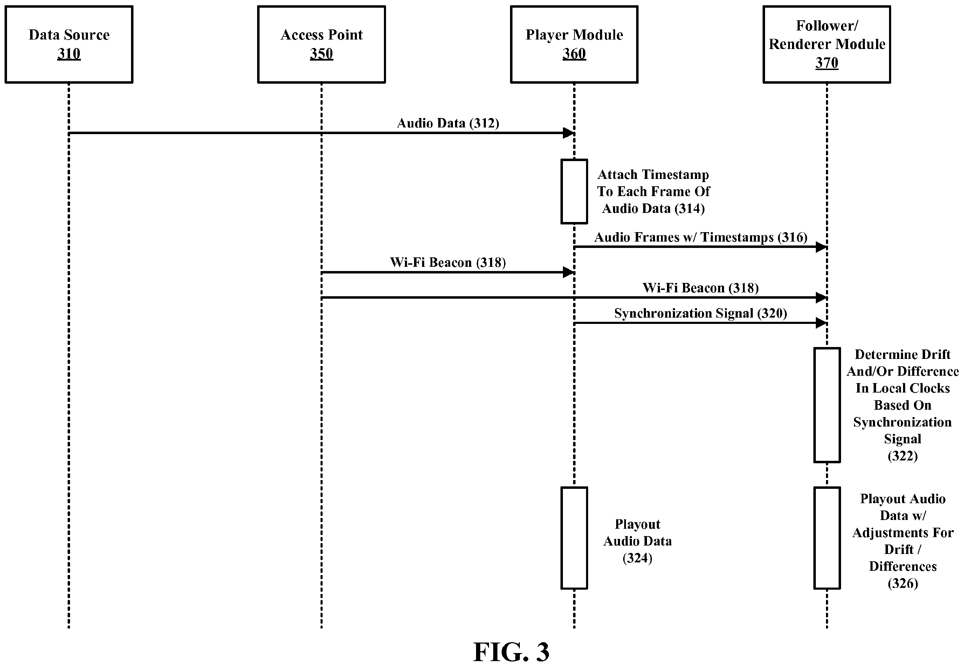

FIG. 3 illustrates example data flows between components of a data or content management system. In accordance with one or more embodiments of the present disclosure, one or more of the example data flows between Data Source 310, Access Point 350, Player Module 360, and Follower/Renderer Module 370 may correspond to one or more communications between Data Source 110, Data Module 115, Data Modules 120a-120n, Data Modules 130a-130m, and/or Data Modules 140a-140p in the example content management system 100 illustrated in FIG. 1 and described above. For example, in accordance with at least one embodiment, Player Module 360 may correspond to Data Module 115 while Follower/Renderer Module 370 may correspond to any of Data Modules 120a-120n, Data Modules 130a-130m, or Data Modules 140a-140p.

The Player Module 360 may receive data (e.g., audio data) (312) from the Data Source 310. The Data Source 310 may be, for example, an online audio/video streaming service or website, a portable user device (e.g., cellular telephone, smartphone, personal digital assistant, tablet computer, laptop computer, smart television, etc.), a storage device containing memory for storing audio/video data (e.g., a standalone hard drive), and the like. The Player Module 360, upon receiving (312) the audio data from the Data Source 310, may attach a timestamp to each frame of the received audio data (314). For example, in accordance with at least one embodiment, the timestamp that may be attached to a given audio frame by the Player Module 360 may indicate or represent the time that the particular audio frame is to be played out. The Player Module 360 may send each of the audio frames with their corresponding timestamps attached (318) to one or more of the Follower/Renderer Modules 370 on the same Access Point 350 as the Player Module 360.

The Follower/Renderer Module 370 may be configured to playout each of the audio frames (318) received from the Player Module 360 at the time indicated by the particular timestamp attached to the audio frame by the Player Module 360 (314). However, it should be understood that the timestamp attached to each audio frame (e.g., the time at which that particular audio frame is to be played out by the Follower/Renderer Module 370) corresponds to the clock of the Player Module 360; the Follower/Renderer Modules 370 that receive these audio frames from the Player Module 360 do not have this same clock.

Accordingly, the methods and systems of the present disclosure are designed to synchronize the clocks of the Follower/Renderer Modules 370 with the clock of the Player Module 360 such that the audio data is played out by the Follower/Renderer Modules 370 and the Player Module 360 synchronously.

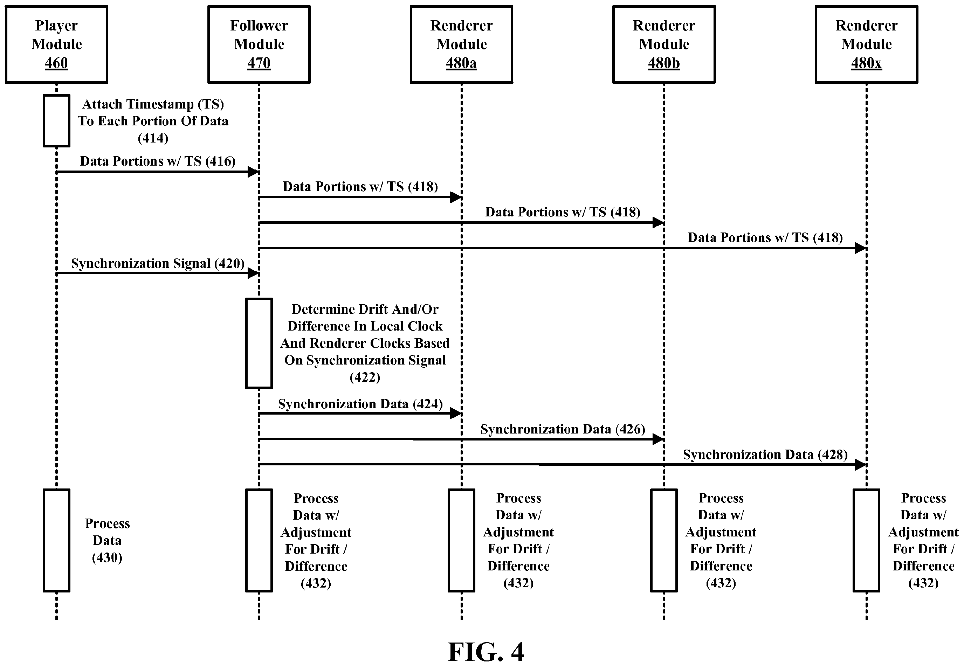

In accordance with one or more embodiments described herein, the synchronization of the local clocks of the Follower/Renderer Modules 370 and the Player Module 360 may be based on using Wi-Fi beacons sent out from the Access Point 350 as a reference. In accordance with one or more other embodiments, the synchronization of the local clocks of the Follower/Renderer Modules 370 and the Player Module 360 may be based on using the same Wi-Fi beacon sent out from the Access Point 350 as a reference. For example, the Player Module 360 and the Follower/Renderer Module 370 may both receive a Wi-Fi beacon (318) from the Access Point 350 (e.g., from a wireless router associated with the Access Point 350 shared by the Follower/Renderer Module 370 and the Player Module 360). The Wi-Fi beacon (318) received at the Player Module 360 and the Follower/Renderer Module 370 may be the same (e.g., the same number value). However, the time at which the Player Module 360 receives the Wi-Fi beacon (318) (according to the local clock of the Player Module 360) may be different from the time at which the Follower/Renderer Module 370 receives the Wi-Fi beacon (318) (according to the local clock of the Follower/Renderer Module 370). This possible discrepancy between the local clock times at which a Wi-Fi beacon may be received at the Player Module 360 and at the Follower/Renderer Module 370 is illustrated in FIG. 4, which is described in detail below.

FIG. 4 illustrates example data flows between a Player Module 460, a Follower Module 470, and multiple Renderer Modules 480a-480x (where "x" is an arbitrary number) in a data or content management system. In accordance with one or more embodiments of the present disclosure, one or more of Player Module 460, Follower Module 470, and Renderer Modules 480a-480x may correspond in structure, configuration, and/or function to one or more of Player Module 360 and/or Follower/Renderer Module 370 in the example arrangement illustrated in FIG. 3 and described above. In addition, one or more of the example data flows (414-432) between Player Module 460, Follower Module 470, and Renderer Modules 480a-480x may correspond to one or more of the example data flows (312-326) between Player Module 360 and/or Follower/Renderer Module 370 illustrated in FIG. 3 and described in detail above. Therefore, for purposes of brevity, further descriptions of Player Module 460, Follower Module 470, and Renderer Modules 480a-480x, as well as the various example data flows (414-432) between them are not included.

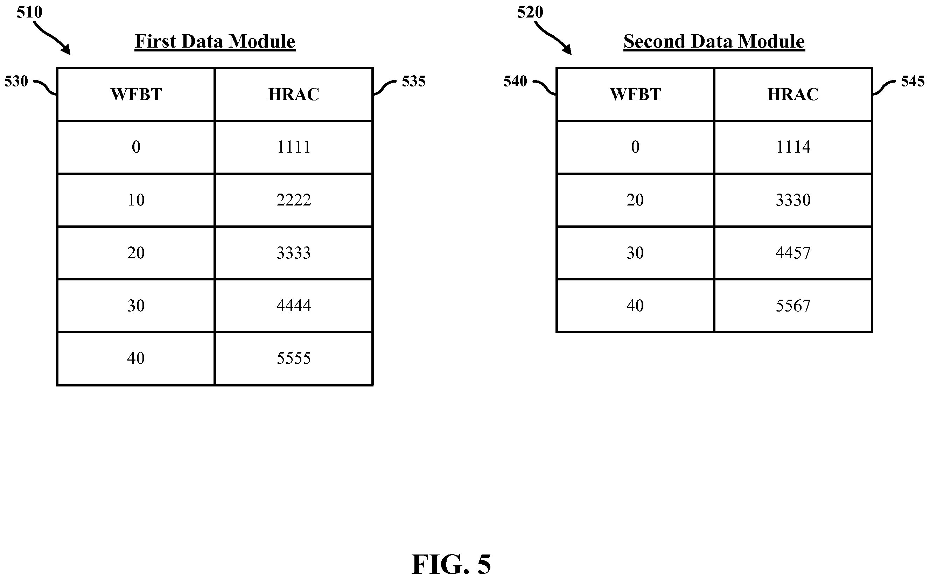

FIG. 5 is a set of tables (510, 520) illustrating example pairs of beacon signals (e.g., Wi-Fi beacons) and corresponding local clock times for a first data module and a second data module on the same wireless network (e.g., Player Module 360 and Follower/Renderer Module 370 on Access Point 350 in the example shown in FIG. 3). In accordance with one or more embodiments described herein, each WFBT received at a data module may serve as an identifier to a local clock of the module. For example, tables 510 and 520 identify WFBT (530, 540) received at the first and second modules, respectively, and corresponding HRAC times (535, 545) (e.g., local clock times) at which each of the WFBT (530, 540) was received at the Module. It should be noted that one data module on a wireless network may not receive all of the Wi-Fi beacons received at another data module on the network, and vice versa. For example, table 510 indicates that the first data module received WFBT (530) 0, 10, 20, 30, and 40 at HRAC times (535) 1111, 2222, 3333, 4444, and 5555, respectively. On the other hand, table 520 indicates that the second data module received WFBT (540) 0, 20, 30, and 40 at HRAC times (545) 1114, 3330, 4457, and 5567, respectively. Thus, the second data module did not receive WFBT 10, which was received at the first data module. In addition, it can be seen from tables 510 and 520 that there are some discrepancies between the HRAC times (535) of the first data module and the HRAC times (545) of the second data module for the same WFBT (530, 540).

Referring again to FIG. 3, it should be understood that the example data flows between Data Source 310, Access Point 350, Player Module 360, and Follower/Renderer Module 370 are not intended to designate or signify a particular order of occurrence of the data flows, or in any way limit the scope of the present disclosure to any particular order of occurrence. Instead, one or more of the example data flows between the components may occur before, simultaneous with (e.g., during), or after one or more of the other example data flows. The same is also true of the example data flows between Player Module 460, Follower Module 470, and Renderer Modules 480a-480x illustrated in FIG. 4 and described in detail above.

For example, the Player Module 360 and the Follower/Renderer Module 370 may receive Wi-Fi beacons (318) from the Access Point 350 before, during, and/or after the receipt of the audio data (312) at the Player Module 360 from the Data Source 310, the attaching of timestamps to each frame of the audio data (314) by the Player Module 360, or the sending of the audio frames with the attached timestamps (316) from the Player Module 360 to the Follower/Renderer Module 370.

Accordingly, multiple Wi-Fi beacons (318) may be received at the Player Module 360 and the Follower/Renderer Module 370 before the audio data (312) is received at the Player Module 360, and these Wi-Fi beacons may be stored by the Player Module 360 and the Follower/Renderer Module 370 together with times at which the beacons were received at each device according to that device's respective local clock. For example, the Wi-Fi beacons (318) and corresponding local clock times may be stored as (WFBT, HRAC) data pairs (e.g., WFBT (430, 440) and corresponding HRAC (435, 445) in the example tables 410 and 420 shown in FIG. 4).

Returning to the synchronization of the local clocks of the Player Module 360 and the Follower/Renderer Module 370, the Player Module 360, upon receiving Wi-Fi beacon (318), may send a synchronization signal (320) to the Follower/Renderer Module 370. In accordance with at least one embodiment, the synchronization signal (320) that may be sent from the Player Module 360 to the Follower/Renderer Module 370 may be a pair of values representative of the Wi-Fi beacon (318) and the corresponding HRAC time for the Player Module 360. For example, the synchronization signal (320) may be a message indicating that the Player Module 360 received Wi-Fi beacon (318) at time "x" (where "x" is a real number).

Because the Follower/Renderer Module 370 also received Wi-Fi beacon (318) (as well as some or all of any previous Wi-Fi beacons received at the Player Module 360 from the Access Point 350), the Follower/Renderer Module 370 may use the data contained in the synchronization signal (320) to determine any drift and/or difference (322) in the local time of the Follower/Renderer Module 370 with respect to the local time of the Player Module 360. For example, in accordance with at least one embodiment, the Follower/Renderer Module 370 may compare the data contained in the synchronization signal (320) to data stored for the Follower/Renderer Module 370 with respect to Wi-Fi beacon (318) as well as previous Wi-Fi beacons received at the Follower/Renderer Module 370. Based on this comparison, the Follower/Renderer Module 370 may determine (322) (e.g., compute, calculate, etc.) an amount of drift and/or difference in the local time of the Follower/Renderer Module 370 with respect to the local time of the Player Module 360.

In accordance with one or more embodiments, the Follower/Renderer Module 370 may be configured to compensate (e.g., adjust) (326) for any drift and/or difference found in the Follower/Renderer Module's 370 local time with respect to the Player Module's 360 local time during playout of the audio data. While any of the various forms of filtering known to those skilled in the art may be used to compensate or adjust for any determined drift, the selected form should be consistent throughout the audio management system. For example, a phase lock loop (PLL) or any other filtering method may be implemented in accordance with the embodiments described herein.

The actual playback time for the audio may be based on the timestamps attached (314) by the Player Module 360 to each of the frames of the audio data and sent (316) to the Follower/Renderer Module 370. Each audio frame may be associated with a unique playout time, and each frame is played out by the Player Module 360 and the one or more Follower/Renderer Modules 370 at this unique time. In accordance with one or more embodiments of the present disclosure, playout times for the audio frames may be computed (e.g., by the Player Module 360) using, for example, the HW clock (HRAC), the duration of previous played out audio frames, the desired latency, and/or some combination thereof.

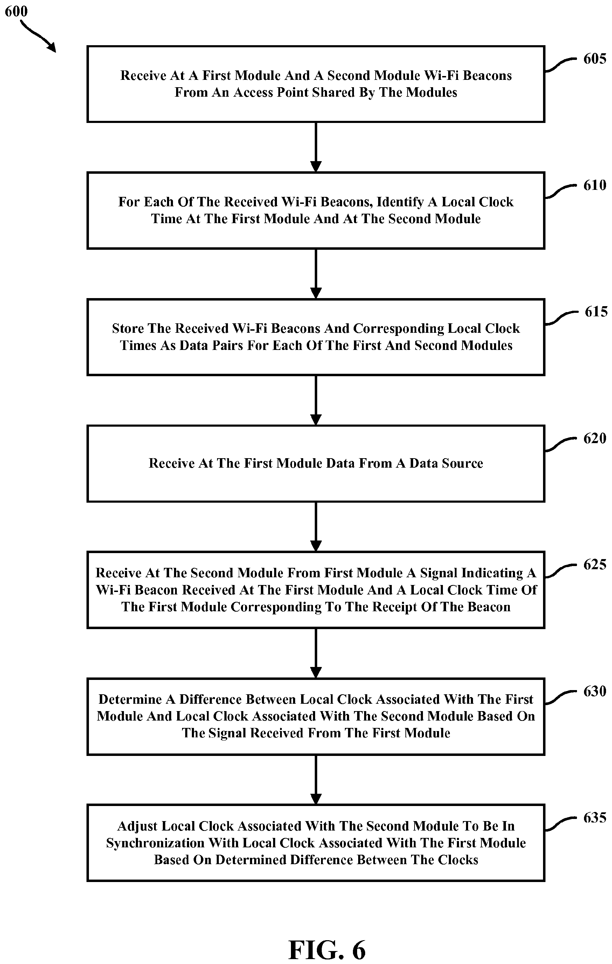

FIG. 6 is an example process 600 for synchronizing clocks of data modules (e.g., audio devices) on a wireless network using Wi-Fi beacons as a reference. In accordance with at least one embodiment, the example process 600 may be performed by a data or content management system similar to content management system 100 described above and illustrated in FIG. 1.

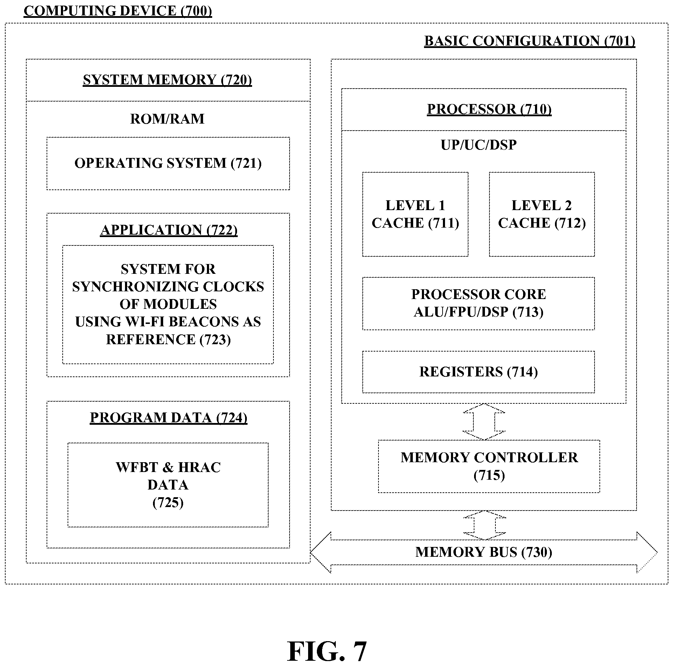

FIG. 7 is a high-level block diagram of an exemplary computer (700) that is arranged for synchronizing clocks of data modules (e.g., audio devices) on a wireless network using Wi-Fi beacons as a reference in accordance with one or more embodiments described herein. In a very basic configuration (701), the computing device (700) typically includes one or more processors (710) and system memory (720). A memory bus (730) can be used for communicating between the processor (710) and the system memory (720).

Depending on the desired configuration, the processor (710) can be of any type including but not limited to a microprocessor (µP), a microcontroller (µC), a digital signal processor (DSP), or any combination thereof. The processor (710) can include one more levels of caching, such as a level one cache (711) and a level two cache (712), a processor core (713), and registers (714). The processor core (713) can include an arithmetic logic unit (ALU), a floating point unit (FPU), a digital signal processing core (DSP Core), or any combination thereof. A memory controller (715) can also be used with the processor (710), or in some implementations the memory controller (715) can be an internal part of the processor (710).

Depending on the desired configuration, the system memory (720) can be of any type including but not limited to volatile memory (such as RAM), non-volatile memory (such as ROM, flash memory, etc.) or any combination thereof. System memory (720) typically includes an operating system (721), one or more applications (722), and program data (724). The application (722) may include a system for synchronizing clocks of data modules connected on a wireless network using Wi-Fi beacons as a reference (723). In accordance with at least one embodiment of the present disclosure, the system for synchronizing clocks of data modules (723) is designed to achieve and maintain highly accurate synchronization (e.g., < 20 microseconds (µs)) between different modules by utilizing Wi-Fi beacons generated by a common access point as a reference when estimating rendering time for data to be rendered across the modules (e.g., estimating playout time for audio data to be played out across audio devices). Using such Wi-Fi beacons as a reference only, and not as the actual clock, ensures that all the data modules' clocks remain synchronized, thus allowing for coherent rendering of data (e.g., playback of audio) across all modules included in the system. The system for synchronizing clocks of data modules (723) is capable of achieving such tight audio synchronization between modules operating on the same access point that any detectable discrepancies in the data (e.g., audible discrepancies in the played out audio data) are eliminated, thereby improving the overall user experience.

Program Data (724) may include storing instructions that, when executed by the one or more processing devices, implement a system (723) and method for synchronizing clocks of data modules connected on a wireless network using Wi-Fi beacons as a reference. Additionally, in accordance with at least one embodiment, program data (724) may include WFBT and HRAC data (725), which may relate to Wi-Fi beacon timestamps and local clock times associated with the receiving of such timestamps. In accordance with at least some embodiments, the application (722) can be arranged to operate with program data (724) on an operating system (721).

The computing device (700) can have additional features or functionality, and additional interfaces to facilitate communications between the basic configuration (701) and any required devices and interfaces.

System memory (720) is an example of computer storage media. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by computing device 700. Any such computer storage media can be part of the device (700).

The computing device (700) can be implemented as a portion of a small-form factor portable (or mobile) electronic device such as a cell phone, a smartphone, a personal data assistant (PDA), a personal media player device, a tablet computer (tablet), a wireless web-watch device, a personal headset device, an application-specific device, or a hybrid device that include any of the above functions. The computing device (700) can also be implemented as a personal computer including both laptop computer and non-laptop computer configurations.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples can be implemented, individually and/or collectively, by a wide range of hardware, software, firmware, or virtually any combination thereof. In accordance with at least one embodiment, several portions of the subject matter described herein may be implemented via Application Specific Integrated Circuits (ASICs), Field Programmable Gate Arrays (FPGAs), digital signal processors (DSPs), or other integrated formats. However, those skilled in the art will recognize that some aspects of the embodiments disclosed herein, in whole or in part, can be equivalently implemented in integrated circuits, as one or more computer programs running on one or more computers, as one or more programs running on one or more processors, as firmware, or as virtually any combination thereof, and that designing the circuitry and/or writing the code for the software and or firmware would be well within the skill of one of skill in the art in light of this disclosure.

In addition, those skilled in the art will appreciate that the mechanisms of the subject matter described herein are capable of being distributed as a program product in a variety of forms, and that an illustrative embodiment of the subject matter described herein applies regardless of the particular type of non-transitory signal bearing medium used to actually carry out the distribution. Examples of a non-transitory signal bearing medium include, but are not limited to, the following: a recordable type medium such as a floppy disk, a hard disk drive, a Compact Disc (CD), a Digital Video Disk (DVD), a digital tape, a computer memory, etc.; and a transmission type medium such as a digital and/or an analog communication medium (e.g., a fiber optic cable, a waveguide, a wired communications link, a wireless communication link, etc.).

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It should also be noted that in situations in which the systems and methods described herein may collect personal information about users, or may make use of personal information, the users may be provided with an opportunity to control whether programs or features associated with the systems and/or methods collect user information (e.g., information about a user's preferences). In addition, certain data may be treated in one or more ways before it is stored or used, so that personally identifiable information is removed. For example, a user's identity may be treated so that no personally identifiable information can be determined for the user. Thus, the user may have control over how information is collected about the user and used by a server.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A computer-implemented method comprising:
receiving (312, 620), at a first data module, data from a data source;
upon receiving the data from the data source, attaching (314) a timestamp to each portion of the received data, wherein the timestamp indicates a time to process the portion of data;
sending (316), from the first data module to a second data module, each portion of the data with the timestamps attached, wherein the first data module is different from the second data module, and the first and second data modules are on a same network;
receiving (318), by the first data module from an access point, a beacon at a first time and storing, by the first data module, the beacon and the first time, wherein the first time is in accordance with a local clock of the first data module;
receiving (318), by the second data module from the access point, the beacon at a second time and storing, by the second data module, the beacon and the second time, wherein the second time is in accordance with a local clock of the second data module, and wherein the beacon received by the first data module is the same beacon that is received by the second data module;
upon receiving the beacon at the first time, sending (320), by the first data module to the second data module, a synchronization signal indicating that the first data module received the beacon at the first time;
receiving (320; 625), at the second data module from the first data module, the synchronization signal;
determining (322, 630), by the second data module, a drift and/or difference between a clock associated with the first data module and a clock associated with the second data module based on the synchronization signal received from the first data module by comparing data on the beacon and the first time contained in the synchronization signal with data on the beacon and the second time stored in the second data module;
processing, by the first data module, the portion of data at the time indicated in the timestamp to process the portion of data; and
processing, by the second data module, the portion of data at the time indicated in the timestamp to process the portion of data by adjusting (326, 635) the time indicated in the timestamp with regard to the determined drift and/or difference.

2. The method of claim 1, wherein the data received from the data source is audio data and a timestamp is attached to each frame of the received audio data; and/or wherein:
one or both of the first data module and the second data module is an audio device; or
one or both of the first data module and the second data module is the audio device, and the audio device is a loudspeaker device.

3. A system comprising:
an access point (250);
a first data module (115, 260, 360); and
a second data module (120a-120n, 130a-130m, 140a-140p, 260, 370);
wherein the system is configured to execute a method according to any one of the preceding claims.

## Patentansprüche

1. Computerimplementiertes Verfahren, umfassend:
Empfangen (312, 620), an einem ersten Datenmodul, von Daten aus einer Datenquelle;
beim Empfangen der Daten von der Datenquelle, anhängen (314) eines Zeitstempels an jeden Abschnitt der empfangenen Daten, wobei der Zeitstempel eine Zeit zum Verarbeiten des Datenabschnitts anzeigt;
Senden (316), von dem ersten Datenmodul zu einem zweiten Datenmodul, von jedem Abschnitt der Daten mit den angehängten Zeitstempeln, wobei sich das erste Datenmodul von dem zweiten Datenmodul unterscheidet und sich das erste und zweite Datenmodul in einem gleichen Netzwerk befinden;
Empfangen (318), durch das erste Datenmodul von einem Zugangspunkt, eines Beacons zu einem ersten Zeitpunkt und speichern, durch das erste Datenmodul, des Beacons und des ersten Zeitpunkts, wobei der erste Zeitpunkt gemäß einem lokalen Takt des ersten Datenmoduls erfolgt;
Empfangen (318), durch das zweite Datenmodul von dem Zugangspunkt, des Beacons zu einem zweiten Zeitpunkt und speichern des Beacons und des zweiten Zeitpunktes durch das zweite Datenmodul, wobei der zweite Zeitpunkt gemäß einem lokalen Takt des zweiten Datenmoduls erfolgt, und wobei das von dem ersten Datenmodul empfangene Beacon dasselbe Beacon ist, das von dem zweiten Datenmodul empfangen wird;
beim Empfangen des Beacons zum ersten Zeitpunkt, senden (320), durch das erste Datenmodul an das zweite Datenmodul, ein Synchronisierungssignal, das anzeigt, dass das erste Datenmodul das Beacon zum ersten Zeitpunkt empfangen hat;
Empfangen (320; 625), an dem zweiten Datenmodul von dem ersten Datenmodul, des Synchronisierungssignals;
Bestimmen (322, 630), durch das zweite Datenmodul, einer Drift und/oder Differenz zwischen einem Takt, der mit dem ersten Datenmodul assoziiert ist, und einem Takt, der mit dem zweiten Datenmodul assoziiert ist, basierend auf dem Synchronisierungssignal, das von dem ersten Datenmodul empfangen wird, durch Vergleichen von Daten auf dem Beacon und der ersten in dem Synchronisierungssignal enthaltenen Zeit mit Daten auf dem Beacon und der zweiten in dem zweiten Datenmodul gespeicherten Zeit;
Verarbeiten, durch das erste Datenmodul, des Teils der Daten zu dem in dem Zeitstempel angegebenen Zeitpunkt, um den Teil der Daten zu verarbeiten; und
Verarbeiten, durch das zweite Datenmodul, des Teils der Daten zu dem in dem Zeitstempel angegebenen Zeitpunkt, um den Teil der Daten zu verarbeiten, indem die in dem Zeitstempel angegebene Zeit in Bezug auf die bestimmte Drift und/oder Differenz angepasst (326, 635) wird.

2. Verfahren gemäß Anspruch 1, wobei die von der Datenquelle empfangenen Daten Audiodaten sind und ein Zeitstempel an jedem Rahmen der empfangenen Audiodaten angehängt ist; und/oder wobei:
eines oder beide der ersten Datenmodule und das zweite Datenmodul eine Audiovorrichtung ist; oder
eines oder beide der ersten Datenmodule und des zweiten Datenmoduls die Audiovorrichtung ist, und die Audiovorrichtung eine Lautsprechervorrichtung ist.

3. System, umfassend:
einen Zugangspunkt (250);
ein erstes Datenmodul (115, 260, 360); und
ein zweites Datenmodul (120a-120n, 130a-130m, 140a-140p, 260, 370);
wobei das System konfiguriert ist, um ein Verfahren gemäß einem der vorhergehenden Ansprüche auszuführen.

## Revendications

1. Un procédé mis en œuvre par ordinateur comprenant :
le fait (312, 620) de recevoir, au niveau d'un premier module de données, des données provenant d'une source de données ;
à la réception des données provenant de la source de données, le fait (314) d'attacher un horodatage à chaque partie des données reçues, l'horodatage indiquant une heure pour traiter la partie des données ;
le fait (316) d'envoyer, depuis le premier module de données vers un deuxième module de données, chaque partie des données avec les horodatages attachés, le premier module de données étant différent du deuxième module de données, et les premier et deuxième modules de données étant sur un même réseau ;
le fait (318) de recevoir, par le premier module de données, depuis un point d'accès, une balise à une première heure et le fait de mémoriser, par le premier module de données, la balise et la première heure, la première heure étant en accord avec une horloge locale du premier module de données ;
le fait (318) de recevoir, par le deuxième module de données, depuis le point d'accès, la balise à une deuxième heure et le fait de mémoriser, par le deuxième module de données, la balise et la deuxième heure, la deuxième heure étant en accord avec une horloge locale du deuxième module de données, et la balise reçue par le premier module de données étant la même balise que celle qui est reçue par le deuxième module de données ;
à la réception de la balise à la première heure, le fait (320) d'envoyer, par le premier module de données au deuxième module de données, un signal de synchronisation indiquant que le premier module de données a reçu la balise à la première heure ;
le fait (320 ; 625) de recevoir, au niveau du deuxième module de données, en provenance du premier module de données, le signal de synchronisation ;
le fait (322, 630) de déterminer, par le deuxième module de données, une dérive et/ou une différence entre une horloge associée au premier module de données et une horloge associée au deuxième module de données sur la base du signal de synchronisation reçu du premier module de données, en comparant les données sur la balise et la première heure contenues dans le signal de synchronisation avec des données sur la balise et la deuxième heure mémorisées dans le deuxième module de données ;
le fait de traiter, par le premier module de données, la partie des données à l'heure indiquée dans l'horodatage pour traiter la partie des données ; et
le fait de traiter, par le deuxième module de données, la partie des données à l'heure indiquée dans l'horodatage pour traiter la partie des données en ajustant (326, 635) l'heure indiquée dans l'horodatage par rapport à la dérive et/ou différence déterminée.

2. Le procédé selon la revendication 1, dans lequel les données reçues en provenance de la source de données sont des données audio et un horodatage est attaché à chaque trame des données audio reçues ; et/ou dans lequel :
l'un parmi le premier module de données et le deuxième module de données, ou les deux, est un dispositif audio ; ou
l'un parmi le premier module de données et le deuxième module de données, ou les deux, est le dispositif audio, et le dispositif audio est un dispositif formant haut-parleur.

3. Un système comprenant :
un point d'accès (250) ;
un premier module de données (115, 260, 360) ; et
un deuxième module de données (120a-120n, 130a-130rn, 140a-140p, 260, 370);
le système étant configuré pour mettre en œuvre un procédé selon l'une quelconque des revendications précédentes.
